# EUROPÄISCHE PATENTSCHRIFT

(11) **EP 2 160 276 B1**
(45) Veröffentlichungstag und Bekanntmachung des Hinweises auf die Patenterteilung: **04.04.2012**
(21) Anmeldenummer: 08758117.9
(22) Anmeldetag: 24.05.2008
(51) Int. Cl.: B29C 37/00, B29C 51/02, B29C 45/14, B29C 45/37, B29C 33/42, B29C 51/10

(54) **VERFAHREN ZUM HERSTELLEN VON FARBIGEN, DREIDIMENSIONAL STRUKTURIERTEN BAUTEILEN MIT FREIFORMFLÄCHEN**
METHOD FOR PRODUCING COLOURED, THREE-DIMENSIONALLY STRUCTURED COMPONENTS WITH FREE-FORM AREAS
PROCÉDÉ DE FABRICATION DE COMPOSANTS COLORÉS, À STRUCTURE TRIDIMENSIONNELLE ET À SURFACES MOULÉES LIBRES

(30) Priorität: 29.06.2007 DE 102007030307
(43) Veröffentlichungstag der Anmeldung: 10.03.2010
(73) Patentinhaber: Saueressig, Kilian, 48691 Vreden (DE)
(72) Erfinder: Saueressig, Kilian, 48691 Vreden (DE)
(74) Vertreter: Tönhardt, Marion
(86) Internationale Anmeldenummer: PCT/DE2008/000877
(87) Internationale Veröffentlichungsnummer: WO 2009/003437

(56) Entgegenhaltungen:
- EP-A- 0 210 620
- EP-A- 0 311 079
- EP-A- 0 412 493
- EP-A- 1 852 239
- WO-A-02/43946
- WO-A-89/07530
- US-A- 4 639 341
- US-A1- 2006 279 015

## Beschreibung

Die Erfindung betrifft ein Verfahren zum Herstellen von farbigen, dreidimensional strukturierten Bauteilen mit Freiformflächen, bei dem die dreidimensionale Struktur durch eine strukturierte Oberfläche bereitgestellt wird.

Die nicht vorveröffentlichte DE 10 2006 021 477.3 offenbart ein Verfahren, mit dem hochwertige, verzerrungsfreie strukturierte Freiformflächen erzeugt werden können. Allerdings ist bisher kein wirtschaftliches Verfahren bekannt, um derartige Freiformflächen mit einer ebenso dreidimensionalen Farbschicht zu versehen. Entweder wird im Stand der Technik eine planare Oberfläche mit einer strukturierten farbtragenden Schicht versehen, oder es wird eine Vielzahl von Schichten benötigt, um Farbinformation auf eine Freiformfläche zu übertragen.

So beschreibt die EP 0 210 620 A2 ein Verfahren zur Herstellung einer eine texturierte Lackschicht aufweisenden Folie, bei dem auf eine Trägerfolie eine härtbare Lackschicht aufgebracht wird, die zunächst nur teilweise gehärtet oder getrocknet und dann mit der gewünschten Texturierung versehen wird. Anschließend wird die Lackschicht vollständig ausgehärtet.

Die DE 0 412 492 A1 offenbart eine Prägefolie, bei der eine opake Zwischenschicht, die unter einer transparenten Deckschicht liegt, großflächig mit einer unifarbenen Farbschicht abgedeckt ist.

Die EP 0 412 493 A2 beschreibt ein Verfahren zum Herstellen von Karten, bei dem lediglich planare Flächen mit einer farbtragenden Schicht versehen werden.

Die US 4 639 341 A1 offenbart ein Verfahren gemäβ dem Oberbegriff des Anspruchs 1.

Bei allen Verfahren kann keine zur Strukturinformation passgenaue Farbinformation erstellt werden. Die nachträgliche, ganzheitliche Farbgebung beispielsweise über einen Tampon- oder Flexodruck, ist für strukturierte Oberflächen nicht geeignet und liefert sehr minderwertige Qualität. Ebenso sind Verfahren, bei denen eine Folie zunächst bedruckt und anschließend geprägt wird, ungenau, da bei der anschließenden Umformung ein Fließprozess stattfindet, der nicht oder nur sehr schwer zu kontrollieren ist. Zudem müssen Materialien, die anschließend geprägt werden, entsprechende plastische oder thermoplastische Eigenschaften besitzen und bei der Umformung immer auch einen elastischen und plastischen Verformungsanteil zeigen, der zu Kopierverlusten führt, beispielsweise mit der Folge, dass beim Insert Moulding zwei Formen benötigt werden. Ebenso geht bei starken Aspektverhältnissen der dreidimensionalen Struktur aufgrund der hohen Temperaturen beim Tiefziehen und der hohen Drücke beim Hinterspritzen Qualität verloren. Bei der Formgebung im Werkzeug sind lange Zykluszeiten notwendig, wobei die Oberflächenstruktur des Werkzeuges zu Beschädigungen der farbigen Tiefziehfolie führen kann und die Passgenauigkeit zwischen Form und Farbe ist praktisch nicht zu kontrollieren.

Es kann daran gedacht werden, die Farbschicht auf eine bereits tiefgezogene Folie aufzubringen, was jedoch mit Qualitätseinbußen im Hinblick auf die dreidimensionale Struktur einhergeht. Die Qualitätseinbußen sind dabei von der Dicke der Farbschicht und der Feinheit der Mikrostrukturierung abhängig. Dies gilt insbesondere für Matt/Glanzeffekte, die auf der Lichtbrechung der Mikrostruktur der Oberfläche des Bauteils basieren. Werden diese Mikrostrukturen durch einen Farbauftrag verschlossen bzw. geglättet, gehen die Matt/Glanzeffekte verloren.

Es ist die Aufgabe der vorliegenden Erfindung, ein Verfahren zum Herstellen von farbigen, dreidimensional strukturierten Bauteilen mit Freiformflächen zur Verfügung zu stellen, bei dem die Farbinformation passgenau mit der dreidimensionalen Strukturoberfläche ist.

Diese Aufgabe wird durch ein Verfahren nach Anspruch 1 oder Anspruch 3 gelöst. Vorteilhafte Ausgestaltungen sind Gegenstand der Unteransprüche.

Nach einer ersten Ausgestaltung weist das erfindungsgemäße Verfahren zum Herstellen von farbigen, dreidimensional strukturierten Bauteilen mit Freiformflächen das Bereitstellen einer strukturierten Oberfläche, das Aufbringen der auf Flächenelementen aufgeteilten dreidimensionalen Farbinformation auf die strukturierte Oberfläche mittels eines berührungslosen digitalen Druckprozesses als mindestens eine farbgebende Schicht, wobei bei zumindest einer der farbgebenden Schichten auf schrägstehenden Flächenelementen der dreidimensionalen Struktur ein entsprechend der Schräge stärkerer Farbauftrag erfolgt, als auf planen Flächenelementen, das Verfestigen der mindestens einen farbgebenden Schicht; das Abziehen der farbgebenden Schicht von der strukturierten Oberfläche, das Tiefziehen der verbleibenden mindestens einen farbgebenden Schicht und das Hinterspritzen der tiefgezogenen mindestens einen farbgebenden Schicht mit einer formbildenden Masse auf.

Die strukturierte Folie kann über eine Direktstrukturierung mittels Laserstrahl, Abformung einer dreidimensional strukturierten Platte oder eines dreidimensional strukturierten Zylinders, die beispielsweise mittels Laserstrukturierung oder 3D-Druckern hergestellt werden, oder auch über eine Abformung einer strukturierten Form erzeugt werden. Um die farbgebende Schicht vor Einflüssen beim Tiefziehen und Hinterspritzen zu schützen, kann die strukturierte Oberfläche bei einer Folie vorgesehen sein, die erst bei Beendigung des Verfahrens von der mindestens einen formgebenden Schicht abgezogen wird.

Daher weist nach einer zweiten Ausgestaltung das erfindungsgemäße Verfahren zum Herstellen von farbigen, dreidimensional strukturierten Bauteilen mit Freiformflächen das Bereitstellen einer strukturierten tiefziehbaren Folie, das Aufbringen der auf Flächenelementen aufgeteilten dreidimensionalen Farbinformation auf die Folie mittels eines berührungslosen digitalen Druckprozesses als mindestens eine farbgebende Schicht, wobei bei zumindest einer dieser farbgebenden Schichten auf schrägstehenden Flächenelementen ein entsprechend der Schräge stärkerer Farbauftrag erfolgt, als bei planen Flächenelementen, Verfestigen der nicht notwendig geschlossenen mindestens einen farbgebenden Schicht; das Tiefziehen der Folie mit der mindestens einen farbgebenden Schicht, das Hinterspritzen der tiefgezogenen Folie mit einer formbildenden Masse, wobei die mindestens eine farbgebende Schicht der Masse zugewandt ist; und das Abziehen der Folie auf, wobei die farbgebende Schicht auf der Masse verbleibt.

Das Tiefziehen kann durch das Hinterspritzen bewirkt werden.

Das Hinterspritzen kann mittels des Spritzgießverfahrens erfolgen. Auch ein RIM (Reaction Injection Moulding)-Prozess ist geeignet, ein Sprühprozess oder ein anderes formgebendes Verfahren.

"Auf Flächenelemente aufgeteilte dreidimensionale Farbinformation" meint, dass die Farbinformation entsprechend der gewünschten Auflösung digitalisiert ist. Zur Farbgebung wird bei der Erfindung ein speziell angepasster Digitaldruck eingesetzt, mit dem auf die dreidimensional strukturierte Folie eine passgenaue Farbinformation aufgebracht wird. Der Farbauftrag ist dabei derart an die dreidimensionale Struktur der Folie angepasst, dass auf Schrägen ein höherer Farbauftrag als bei planen Flächenelementen erzeugt wird, so dass im Ergebnis der Farbauftrag flächenhomogen erfolgt bzw. auf die Projektionsfläche unterschiedlich erfolgt. Die Übertragungsfunktion zwischen Oberflächendaten und Farbdaten kann linear sein. Es können photorealistische Bilder auf dreidimensionalen Oberflächen erzeugt werden, ohne dass die mikrostrukturierten Oberflächen verloren gehen. Die photorealistischen Bilder werden beispielsweise über einen Vierfarbdruck mit Zyan, Magenta, Gelb und Schwarz (CMYK) erzeugt.

Zusätzlich zu farbgebenden Schichten können Funktionsschichten eingearbeitet werden, auch sehr dünne Funktionsschichten, wie sie insbesondere für die Photovoltaik benötigt werden. Anders als im Stand der Technik ist bei der Erfindung nicht zu befürchten, dass diese Schichten bei einer Umformung beschädigt werden.

Nach einer vorteilhaften Ausgestaltung wird die farbgebende Schicht aus einem elastisch härtenden Material, oder aus einem Material, das nach dem Härten beispielsweise durch Erwärmen elastisch wird, aufgebaut. So wird sie die Verformung des Tiefziehprozesses überstehen, ohne selbst zu brechen oder zu reißen.

Weiter vorteilhaft haftet die farbgebende Schicht an der Folie weniger stark als an der formbildenden Masse, und die Kohäsion der farbgebenden Schicht ist größer als die Adhäsion der farbgebenden Schicht zur formbildenden Masse. Somit ist ein problemloses Entformen des Bauteils möglich. Da die für das Hinterspritzen verwendete Form selbst keine strukturierte Designoberfläche aufweist, wird ein automatisches Entformen auch von sehr tiefen Strukturen problemlos möglich.

Nach einer bevorzugten Ausführungsform wird auf die strukturierte Oberfläche vor dem Aufbringen der farbgebenden Schicht eine weitere Schicht aufgebracht, die zumindest teilweise transparent, zumindest teilweise halbtransparent oder zumindest teilweise deckend ist. Diese Schicht kann eine Oberflächenschutzschicht, eine Haftvermittlerschicht oder eine Farbgrundierungsschicht sein.

Es ist besonders bevorzugt, dass die strukturierte Folie ausschließlich elastisch verformt wird. Dann kann die strukturierte Folie mehrfach eingesetzt werden.

Weiter vorteilhaft weist die strukturierte Seite der farbgebenden Schicht eine Versiegelungsschicht auf, die eine im Wesentliche glatte freiliegende Oberfläche haben kann. Diese Ausgestaltung des Verfahrens ermöglicht es, dreidimensionale Farbinformation mit einer glasklaren oder teiltransparenten glatten Oberfläche herzustellen, ohne dass die dreidimensionale Anmutung verloren geht. Dies wäre immer der Fall, wenn eine dreidimensionale farbige Oberfläche zum Schutz oder zur einfacheren Reinigung mit einer transparenten glatten Oberfläche versiegelt wird, da die Lichtbrechung nicht mehr an der dreidimensionalen Oberfläche, sondern an der glatten transparenten Oberfläche erfolgt. Vorzugsweise wird daher die Versiegelungsschicht im Hinblick auf Farbe und/oder Gradation definiert eingefärbt. Dabei können die Farb- und/oder Gradationsdaten mit den Daten der dreidimensionalen Struktur abgeglichen werden. Die Versiegelungsschicht sollte zweckmäßigerweise ein geringeres Reflexionsvermögen als die darunterliegende farbgebende Schicht aufweisen.

Nach einer weiteren Ausgestaltung der Erfindung ist die strukturierte Folie transparent. Dann ist ein nachträgliches Aushärten von farbgebenden Schichten oder Funktionsschichten anschließend an den Tiefzieh- und Hinterspritzprozess möglich.

Nach einer Ausgestaltung des Verfahrens berührt die strukturierte Folie eine beim Hinterspritzen verwendete Form an einem Ort oder an einer Vielzahl von Orten. Die beim Hinterspritzen verwendete formgebende Masse berührt an diesen Orten die Form nicht. Damit ist die Herstellung eines perforierten Bauteiles oder eines Bauteiles mit Aussparungen möglich.

Im Folgenden soll die Erfindung anhand der beigefügten Zeichnung näher erläutert werden. Es zeigt:
- Figur 1: in schematischer Darstellung den Ablauf zum Herstellen eines farbigen, dreidimensionalen strukturierten Bauteils nach einer Ausführungsform der vorliegenden Erfindung;
- Figur 2: Einzelheiten des Hinterspritzens bei dem Verfahren nach Figur 1;
- Figur 3: ein mit dem Verfahren nach Figur 1 hergestelltes Bauteil;
- Figur 4: einen Verfahrensschritt beim Herstellen eines perforierten Bauteils;
- Figur 4a: eine Draufsicht auf den Ausschnitt A der Figur 4;
- Figur 5: eine weitere Ausführungsform eines Verfahrensschrittes gemäß der vorliegenden Erfindung;
- Figur 5a: ein mit dem Verfahrensschritt der Figur 5 hergestelltes Bauteil;
- Figur 6: eine schematische Darstellung eines Verfahrens zum Herstellen einer Folie, die aus einer farbgebenden, einer strukturgebenden und einer elastischen Schicht besteht;
- Figur 7: eine Variation des Verfahrens zum Herstellen einer Folie; und
- Figur 8: ein Ausführungsbeispiel einer dreidimensionalen Struktur mit teiltransparenten, transparenten und deckenden Farbbereichen.

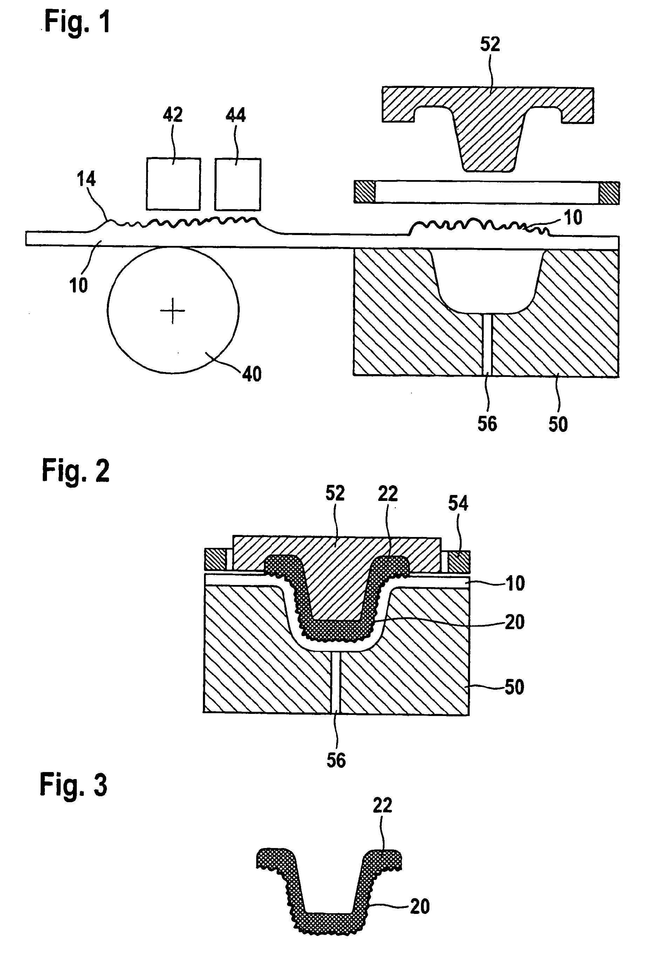

Figur 1 zeigt in schematischer Weise ein Verfahren zum Herstellen eines farbigen, dreidimensional strukturierten Bauteils mit Freiformflächen gemäß der vorliegenden Erfindung. Zunächst wird eine Folie 10 bereitgestellt, deren Ausgestaltung an die zu bildende Freiformfläche angepasst ist, wie es in der DE 10 2006 021 477.3 beschrieben ist. Die Folie 10 ist mit einer Strukturierung 12 versehen und zeichnet sich weiterhin durch ein variables Dickenprofil aus, das genau auf die zu bildende Freiformfläche abgestimmt ist und somit eine optimierte, nahezu verzerrungsfreie strukturierte Freiformfläche liefert. Die Folie 10 wird als Band über ein nicht weiter im Detail dargestelltes Transportsystem 40 zunächst unter eine Druckereinheit 42 geführt, welche die Folie 10 passgenau in einem berührungslosen Digitaldruckprozess mit einer Farbschicht 20 versieht, die eine zur dreidimensionalen Strukturierung 12 der Folie 10 passgenaue Farbinformation aufbringt. In einer nachfolgenden Härtestation 44 wird die Farbschicht 20 ausgehärtet. Die so bedruckte, strukturierte Folie 10 wird nun zu einer Spritzgussform 50, 52 geführt. Auf an sich bekannte Weise schließt sich zunächst ein über der Folie 10 liegender Tiefziehrahmen 54 und hält die Folie 10 auf der Patrize 50 der Spritzgussform. Anschließend wird die Matrize 52 der Spritzgussform in Richtung auf die Patrize 50 abgesenkt.

Figur 2 zeigt die tiefgezogene Folie 10 mit der Farbschicht 20 in der geschlossenen Spritzgussform 50, 52. Durch einen Vakuumkanal 56 wird sichergestellt, dass sich zwischen der Patrize 50 und der strukturierten Folie 10 keinerlei Luft oder Gleitmittel befindet. Anschließend wird der durch die Matrize 52 definierte Freiraum zwischen Farbschicht 20 und Matrize 52 mit Spritzgussmasse 22 gefüllt. Anschließend kann entformt werden. Dabei wird nach dem Öffnen der Spritzgussform die Folie 10 abgezogen.

Es kann vor dem Durchlaufen der Druckeinheit 42 eine transparente Schicht aufgebracht werden, die beispielsweise als Haftvermittler oder Oberflächenschutz dient. Ebenso kann auf die Farbschicht 20 eine weitere Deckschicht aufgetragen werden, die beispielsweise als Farbgrundierung oder als Haftvermittler zur Spritzgussmasse 22 dient.

Das fertiggestellte Bauteil ist in Figur 3 gezeigt. Die Farbschicht 20 hat die Strukturierung der Folie 10 abgeformt. Somit ist ein Freiformflächen-Bauteil mit einer passgenauen farbigen und strukturierten Oberfläche entstanden. Die Farbschicht 20 kann dabei auch sehr dick sein, ohne die dreidimensionale Struktur zu beeinträchtigen, da die Farbschicht 20 Mikrostrukturen, Nanostrukturen usw. nicht verschließt.

Die strukturierte Folie 10 kann als Platte oder Band vorliegen und dem Drucker 42 und der Spritzgussform 50, 52 vereinzelt oder als Band zugeführt werden. Die strukturierte Folie 10 ist vorzugsweise eine Folie, die sich ausschließlich elastisch verformt und somit einen Spritzgießprozess mehrmals durchlaufen kann. Die Farbschicht 20 wird während des Tiefziehens ebenfalls in einen elastischen Zustand gebracht, dass sie die Verformung des Tiefziehprozesses ohne Beschädigung übersteht. Wenn auch für die Farbschicht 20 elastische Materialien eingesetzt werden, bedarf es keiner Vorbehandlung, wie dem Aufwärmen auf der strukturierten Folie 10.

Der Tiefziehprozess muss kein separater Verfahrensschritt sein, denn er kann durch das Einspritzen der Spritzgussmasse 22 ersetzt werden. In diesem Fall dient der Kanal 56 lediglich zur Entlüftung.

Ein besonderer Vorteil des erfindungsgemäßen Verfahrens besteht darin, dass die strukturierte Folie 10 durch die Farbschicht 20 und gegebenenfalls weitere Funktionsschichten beispielsweise vor Verschleiß durch Abrasion oder eine mögliche thermische Überlastung durch die Spritzgussmasse 22 geschützt ist. Da ebenso keine thermoplastische Umwandlung der strukturierten Folie 10 erforderlich ist, können auch vergleichsweise kalte Spritzgussmassen 22 verarbeitet werden. So können zum Beispiel duromere, thermoplastische oder keramische Spritzgussmassen 22 zum Einsatz kommen.

Durch Austauschen der Folie 10 gegen eine mit anderer Strukturierung können bei gleichem Werkzeug verschiedenste dreidimensionale Farbstrukturen erzeugt werden, ohne dass man beispielsweise die Spritzgussform 50, 52 wechseln müsste. Farbwechsel können leicht vorgenommen werden, ohne das Werkzeug oder die Folie 10 zu wechseln. Da das Werkzeug selbst keine Design-Struktur aufweist, können keine Beschädigungen an Farbschichten auftreten. Da die strukturierte Folie 10 ein Bestandteil des fertiggestellten Bauteils ist, entstehen keine Folien-Schnittkanten. Die Design-Struktur der Folie 10 kommt mit dem Werkzeug nicht in Berührung und kann somit auch nicht verformt oder auf andere Weise geschädigt werden.

Die strukturierte Folie 10 kann transparent sein, so dass ein Nachhärten von vorgehärteten UV-Schichten durch die Folie 10 hindurch möglich ist. Bei schwierig zu verarbeitenden und nicht elastischen Funktionsschichten werden diese erst nach dem Tiefziehen gehärtet. Das Härten kann thermisch, mittels Strahlung über die Spritzgussmaschine oder von der Vorderseite her erfolgen. Beim Einsatz von keramischen Spritzmassen zur Herstellung von Grünlingen können diese ebenso mit Farbschichten und/oder mit Funktionsschichten versehen werden. So lassen sich farbige Keramiken oder Keramiken mit besonderen Oberflächeneigenschaften herstellen. Die Keramikformlinge können auch für den Metallguss eingesetzt werden.

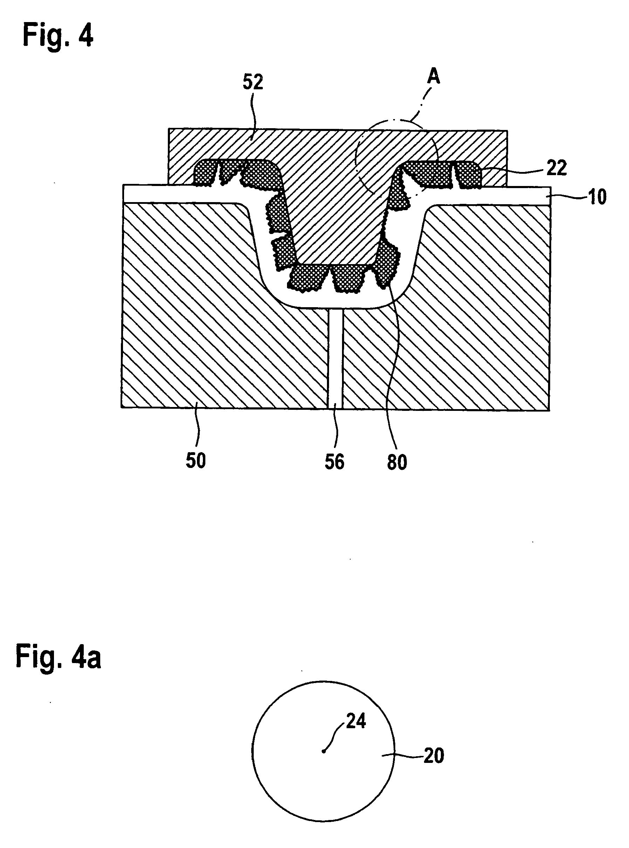

In Figur 3 ist schematisch die Herstellung eines perforierten Bauteils veranschaulicht. Der Verfahrenslauf entspricht im Wesentlichen dem der Figur 1, mit der Ausnahme, dass eine besonders strukturierte Folie 10 eingesetzt wird. Diese ist so strukturiert, dass sie die Matrize 52 an verschiedenen Stellen 24 berührt. Figur 4a zeigt die Situation in der Draufsicht. Die Farbschicht 20 ist am Ort 24 unterbrochen bzw. im Drucker 42 diskontinuierlich erfolgt, so dass an diesem Ort 24 die Struktur der Folie 10 freiliegt. Beim Hinterspritzen liegt somit die Folie 10 direkt an der Matrize 52, so dass der Ort 24 frei von Spritzgussmasse 22 gehalten wird.

Figur 4 zeigt eine Ausgestaltung des Verfahrens der Erfindung, bei dem nach dem Bedrucken und Aushärten der Farbschicht 20 von der strukturierten Folie 10 (Figur 1) abgezogen wird, bevor er in die Spritzgussform 50, 52 gelangt. Der so hergestellte elastische Film 30, der die strukturierte Farbschicht 20 enthält, wird nun in dem Spritzgusswerkzeug 50, 52 auf die bereits beschriebene Art tiefgezogen. Der Film 30 verhält sich bei den Temperaturen beim Tiefziehen als auch beim Spritzgießen nicht thermoplastisch. Da die dreidimensionale Farbschicht 20 mit der Patrize 50 direkt in Kontakt kommt, besteht die Gefahr einer plastischen irreversiblen Verformung der Farbschicht 20. Daher wird die Oberfläche 58 der Patrize vorzugsweise mit einer viskoelastischen Schicht versehen, die sich hinter einer elastischen Membran befinden kann und die die strukturierte Farbschicht 20 vor Beschädigung schützt. Die Schicht 60 ist dabei so dünn wie nötig und hat gute wärmeleitende Eigenschaften.

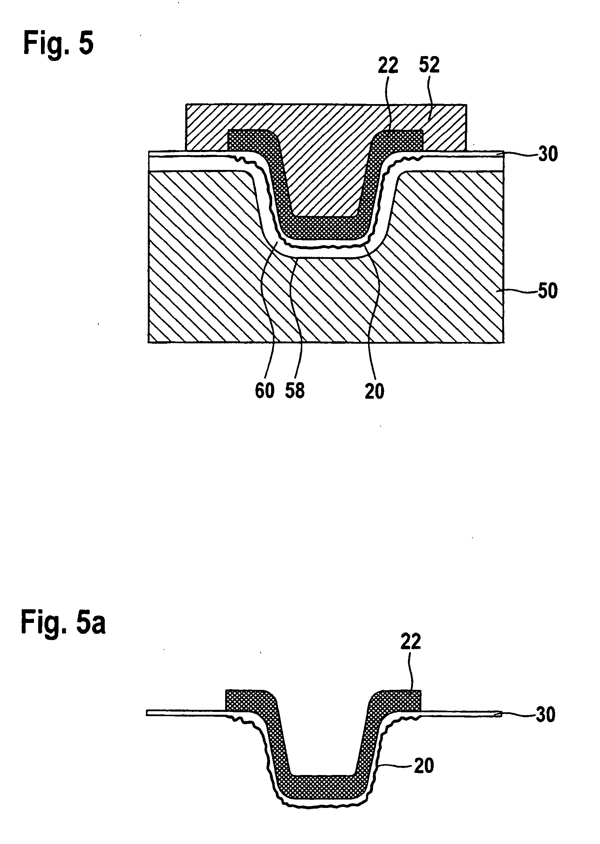

In Figur 5 ist das entformte Bauteil dargestellt. Der Film 30 mit der strukturierten Farbschicht 20 hat sich mit der Spritzgussmasse 22 verbunden. Die dreidimensionale Struktur des Films 30 bleibt dabei vollständig erhalten. Die über die Spritzgussmasse 22 überstehenden Enden des Films 30 werden nun entfernt.

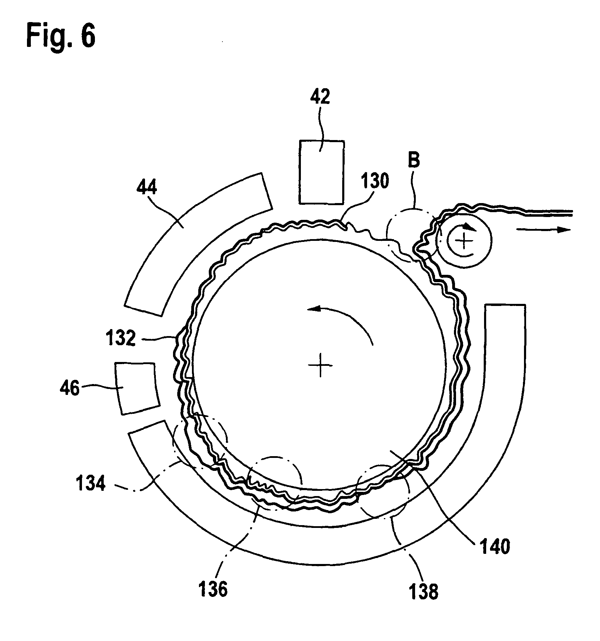

Figur 6 zeigt eine schematische Darstellung eines Verfahrens zum Herstellen einer Folie, die aus einer farbgebenden, strukturgebenden und elastischen Schicht 130, die auf einer strukturierten Walze 140 erzeugt wird. Dabei wird die Schicht 130 vorzugsweise im Digitaldruck durch eine Druckeinheit aufgebracht. Anschließend wird die Schicht 130 in einer Erhärtereinheit 44 ausgehärtet bzw. getrocknet.

In einem weiteren Schritt können eine oder mehrere Funktionsschichten 132 auf die Schicht 130 aufgebracht werden. Dazu wird eine entsprechende Applikationseinheit 46 eingesetzt, beispielsweise ein Sprühleiste, die Kalandrierung einer thermoplastischen Masse usw. Die Funktionsschicht 132 kann dabei über Bereiche 134, 136 variabler Dicke verfügen. Auch die farb- und strukturgebende Schicht 130 kann ein variables Dickenprofil oder Aussparungen 138 aufweisen. Nach dem Aufbringen der Funktionsschicht wird der Verbund in einer geeigneten Einheit 48 ausgehärtet und gegebenenfalls geglättet. Der fertiggestellte Verbund 130, 132 wird über eine Umlenkwalze 142 geführt und dadurch bei B von der strukturierten Walze 140 entformt. Der Verbund 130, 132 kann nun tiefgezogen und hinterspritzt werden.

Es kann auch eine Folie auf die dreidimensional strukturierte Farbschicht aufkaschiert werden, wobei dickenvariable Folie oder auch Folien mit Aussparungen hergestellt werden können. Damit die Herstellung derartiger Folien kostengünstig ist, wird vorzugsweise mit einer strukturierten Walze gearbeitet, die rotiert und mit einem Digitaldruck wie oben beschrieben bedruckt wird.

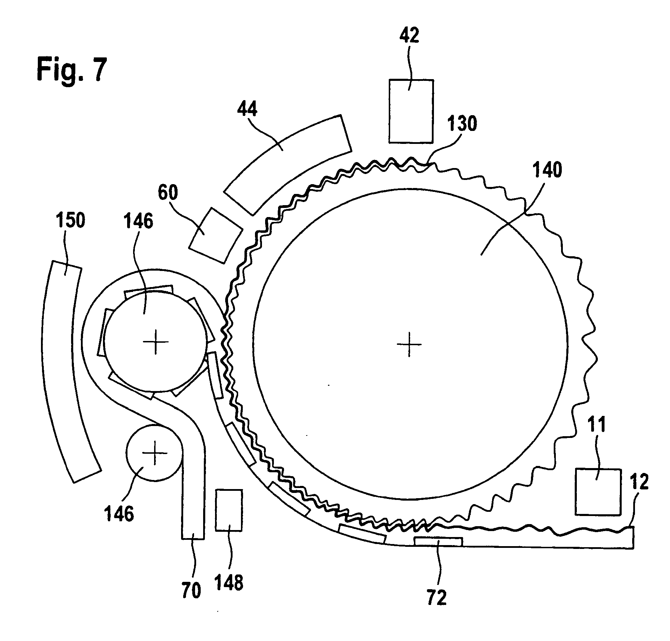

Figur 7 zeigt ein Ausführungsbeispiel für eine mit einer Folie 70 kaschierten farb- und strukturgebenden Schicht 130, bei dem die farb- und strukturgebende Schicht 130 zunächst über eine Druckeinheit 42 auf eine strukturierte Walze 140 aufgebracht und anschließend in eine Härteeinheit 44 ausgehärtet wird.

Es kann vorab auf die strukturierte Walze 140 eine transparente Funktionsschicht aufgetragen werden.

Mittels einer Applikatoreinheit 160 wird auf die ausgehärtete Schicht 130 ein Haftvermittler aufgebracht. Über ein Walzensystem 144, 146 wird eine Folie 70 in Richtung auf die strukturierte Walze 140 bzw. die darauf aufgetragene Schicht 130 geführt. Falls eine thermoplastische Folie 70 eingesetzt wird, wird diese zweckmäßigerweise über Aufwärmeinheiten 148, 150 von beiden Seiten her aufgeheizt und plastifiziert. Die Walze 146 weist dabei eine Oberflächenstruktur auf, die für eine Rückseitenprägung 72 der Folie 70 sorgt. Der fertiggestellte Verbund wird dann von der strukturierten Walze 140 abgezogen und bei einem späteren Tiefziehprozess lediglich elastisch umgeformt, wobei die Folie 70 abhängig von der Stabilität der farb- und strukturgebenden Schicht 130 sowohl elastisch als auch thermoplastisch umgeformt werden kann. Diese Kombination der Eigenschaften gewährleistet bei einem späteren Tiefziehprozess, dass die farb- und strukturgebende Schicht 130 ihre zuvor erzeugte Struktur beibehält.

Neben Folien können auch Textilien, Schäume, Schrumpffolien usw. aufkaschiert werden.

Das erfindungsgemäß hergestellte Freiformflächen-Bauteil mit einer dreidimensionalen Farbstruktur kann anschließend mit einer nahezu glatten und teiltransparenten bzw. transparenten Oberfläche versiegelt werden, ohne dass die dreidimensionale Anmutung verloren geht.

Um einen ausgeprägteren dreidimensionalen Tiefeneffekt zu erzielen, wird eine Versiegelungsschicht so eingefärbt, dass sie über eine definierte Transparenz verfügt. Dies wird durch definierte Abstufung von Farbe und/oder Gradation erreicht. So kann beispielsweise eine transparente Schicht schwarz eingefärbt werden, so dass bei tiefen Strukturen ein deutlich dunklerer Farbton entsteht, als bei flachen Strukturen. Ebenso ist die Einfärbung mit unterschiedlichsten Farbgebungen möglich. Es können Farbstoffe oder Pigmente unterschiedlichster Farbe und mit unterschiedlichen Absorptions- und Reflexionsvermögen eingesetzt werden.

Die Versiegelungsschicht kann auch angepasste Farbinformation enthalten, die den dreidimensionalen Effekt verstärkt. Dazu wird die Information der dreidimensionalen Struktur mit den Daten der Farbinformation abgeglichen. So kann beispielsweise ein tief gelegenes dreidimensionales Element mit einem dunkleren Farbton versehen werden als ein höher gelegenes dreidimensionales Element. Die Datenaufbereitung kann dabei auf einfache Art und Weise erfolgen, indem die Tiefeninformation der dreidimensionalen Daten in eine Halbtoninformation umgewandelt wird und als Farbgradation über die Farbinformation gelegt wird. Dieser Vorgang verstärkt auch dreidimensionale Strukturen, die nicht mit einer transparenten Oberfläche versiegelt werden.

Um die Spiegelung an der Oberfläche möglichst gering zu halten, werden Versiegelungsschichten mit geringem Reflexionsvermögen eingesetzt, so dass die Lichtbrechung und Reflexion an der transparenten Oberfläche reduziert wird. Durch eine Kombination mit möglichst stark reflektierenden Farbschichten der dreidimensionalen Struktur wird eine deutlich verbesserte dreidimensionale Anmutung erzielt. So kann auch vorgesehen sein, als unterste Schicht eine stark reflektierende transparente Schicht auf die strukturgebende Oberfläche aufzubringen, danach erst die farbgebenden Schichten.

Alle Ausgestaltungen für die Versiegelungsschicht können beliebig miteinander kombiniert werden.

Der Druckprozess in der Druckeinheit 42 kann mit transparenten, teiltransparenten oder deckenden Farbschichten erfolgen, diese können auch beliebig kombiniert werden. Der Druckprozess kann wiederholt werden, ohne die spätere Struktur der Bauteiloberfläche zu beeinträchtigen. Ebenso können geschlossene, sehr dünne Funktionsschichten übereinander gedruckt werden, ohne dass diese zerstört werden, da die Farb- bzw. Funktionsgebung und die Strukturbildung ohne eine Umformung erfolgen, die die Schichten zerstören könnte. Derartige strukturierte und funktionelle Oberflächen haben ein sehr weites Einsatzgebiet, von dekorativen Effekten bis hin zur Photovoltaik, für elektrische oder optische Schaltkreise bzw. Speichermedien bis hin zur Wärmeisolation bzw. -absorption, ohne dabei Einbußen im Hinblick auf das Design nehmen zu müssen.

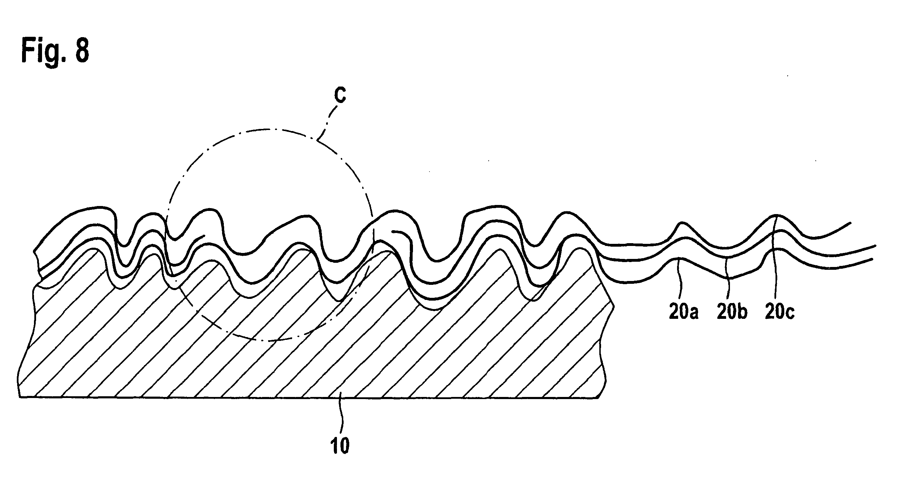

Figur 8 zeigt ein Ausführungsbeispiel, bei dem teiltransparente, transparente und deckende Farbbereiche 20a 20b, 20c mit der dreidimensionalen Struktur kombiniert sind. Auf einer struktur- und farbgebenden Folie 10 als Kopiervorlage wird teiltransparente Bildinformation 20a aufgebracht, darüber werden die nicht transparenten Bildbereiche 20b gelegt. Der Verbund wird durch eine transparente glasklare Schicht 20c abgeschlossen. Im Bereich C sind nicht transparente Bildbereiche ausgespart. Diese Ausführung eignet sich beispielsweise für strukturierte Displays, beleuchtbare Schalter und vergleichbare Anwendungen. So können beispielsweise Schalter erst dann als Schalter erscheinen, wenn sie berührt werden. Im passiven Zustand unterscheiden sie sich nicht von ihrer Umgebung. Auch hier kann mit unterschiedlich reflektierenden Schichten bzw. Unterlagen gearbeitet werden, zum Beispiel mit Reflektoren, die nur einen Teil des sichtbaren Lichts reflektieren.

Die Erfindung stellt somit Verfahren zur Verfügung, mit denen Freiform-Bauteile mit farbigen Informationen hergestellt werden können, die passgenau zur strukturierten Oberfläche sind und sich über die gesamte Tiefe der strukturierten Oberfläche erstrecken können und nicht durch eine Umformung gestört werden. So können beispielsweise Formteile für das Automobilinterieur, Möbeloberflächen, Verpackungen, Label, Etiketten, teiltransparente Displays, Bildschirmoberflächen, Schalter, Beleuchtungssysteme usw. hergestellt werden, die zudem noch über zahlreiche weitere Funktionen verfügen können, indem beispielsweise holographische oder sicherheitsrelevante Strukturen erzeugt werden. Die Erfindung eignet sich zur Herstellung von Freiformbauteilen mit photorealistischen, dreidimensionalen Bildern, wobei unterschiedliche farbige Bildinformation eingebaut werden kann, die Bildinhalte abhängig vom Betrachtungswinkel darstellen. Die Freiformbauteile können mit Lentikular-Linsen versehen werden, indem entsprechende transparente oder halbtransparente Schichten entsprechend strukturiert werden.

Diverse Lacksysteme können verwendet werden, beispielsweise lösemittelhaltige, wasserlösliche, thermoplastische, auf Pulver basierende Lacksysteme, die getrocknet oder ausgehärtet werden, beispielsweise durch ultraviolette oder infrarote Strahlung, oder vernetzt werden.

Die erfindungsgemäßen Verfahren sind für den Spritzgussprozess optimiert.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

## Patentansprüche

1. Verfahren zum Herstellen von farbigen, dreidimensional strukturierten Bauteilen mit Freiformflächen, mit den Schritten:
- Bereitstellen einer strukturierten Oberfläche (10, 140);
- Aufbringen einen dreidimensionalen Farbinformation auf die strukturierte Oberfläche (10, 140) mittels eines berührungslosen digitalen Druckprozesses als mindestens eine farbgebende Schicht (20);
- Verfestigen der mindestens einen farbgebenden Schicht (20);
- Abziehen der farbgebenden Schicht (20) von der strukturierten Oberfläche (10, 140);
- Tiefziehen der verbleibenden mindestens einen farbgebenden Schicht (20); und
- Hinterspritzen der tiefgezogenen mindestens einen farbgebenden Schicht (20) mit einer formbildenden Masse;
**dadurch gekennzeichnet, dass** bei zumindest einer der farbgebenden Schichten (20) auf schrägstehenden Flächenelementen der dreidimensionalen Struktur ein entsprechend der Schräge stärkerer Farbauftrag erfolgt, als auf planen Flächenelementen;

2. Verfahren nach Anspruch 1, bei dem die strukturierte Oberfläche an einer Folie (10), Platte, Walze (140) oder dergleichen vorgesehen ist.

3. Verfahren zum Herstellen vonfarbigen, dreidimensional strukturierten Bauteilen mit Freiformflächen, mit den Schritten:
- Bereitstellen einer strukturierten tiefziehbaren Folie (10);
- Aufbringen der auf Flächenelemente aufgeteilten dreidimensionalen Farbinformation auf die Folie mittels des berührungslosen digitalen Druckprozesses als mindestens eine farbgebende Schicht (20);
- Verfestigen der nicht notwendig geschlossenen mindestens einen farbgebenden Schicht (20);
- Tiefziehen der Folie (10) mit der mindestens einen farbgebenden Schicht (20);
- Hinterspritzen der tiefgezogenen Folie mit einer formbildenden Masse, wobei die farbgebende Schicht der Masse zugewandt ist; und
- Abziehen der Folie (10), wobei die mindestens eine farbgebende Schicht (20) auf der Masse (22) verbleibt.

4. Verfahren nach Anspruch 1 oder 3, bei dem das Tiefziehen durch das Hinterspritzen bewirkt wird.

5. Verfahren nach Anspruch 1 oder 3, bei dem die farbgebende Schicht (20) aus einem elastisch härtenden Material oder aus einem Material, das nach dem Härten beispielsweise durch Erwärmen elastisch wird, aufgebaut wird.

6. Verfahren nach Anspruch 3, bei dem die farbgebende Schicht (20) an der Folie (10) weniger stark haftet als an der formbildenden Masse (22) und die Kohäsion der farbgebenden Schicht größer als die Adhäsion der farbgebenden Schicht zur formbildenden Masse ist

7. Verfahren nach Anspruch 1 oder 3, bei dem auf die strukturierte Oberfläche (10, 140) bzw. Folie vor dem Aufbringen der farbgebenden Schicht eine weitere Schicht aufgebracht wird, die zumindest teilweise transparent, zumindest teilweise halbtransparent oder zumindest teilweise deckend ist

8. Verfahren nach Anspruch 7, bei dem die weitere Schicht eine Oberflächenschutzschicht, eine Haftvermittlerschicht oder eine Farbgruadierungsschicht ist.

9. Verfahren nach Anspruch 3, bei dem die strukturierte Folie (10) ausschließlich elastisch verformt wird.

10. Verfahren nach Anspruch 3, bei dem die farbgebende Schicht (20) mit einer Versiegelungsschicht versehen wird.

11. Verfahren nach Anspruch 10, **dadurch gekennzeichnet, dass** die Versiegelungsschicht eine im Wesentlichen glatte freiliegende Oberfläche aufweist.

12. Verfahren nach Anspruch 10, **dadurch gekennzeichnet, dass** die Versiegelungsschicht im Hinblick auf Farbe und/oder Gradation definiert eingefärbt wird.

13. Verfahren nach Anspruch 12, **dadurch gekennzeichnet, dass** die Farb- und/oder Gradationsdaten mit den Daten der dreidimensionalen Struktur abgeglichen werden.

14. Verfahren nach Anspruch 10, **dadurch gekennzeichnet, dass** die Versiegelungsschicht ein geringeres Reflexionsvermögen als die darunterliegende farbgebende Schicht aufweist.

15. Verfahren nach Anspruch 3, **dadurch gekennzeichnet, dass** die strukturierte Folie (10) transparent ist.

16. Verfahren nach Anspruch 3, **dadurch gekennzeichnet, dass** die strukturierte Folie eine beim Hinterspritzen verwendete Form (52) an einem Ort (24) oder an einer Vielzahl von Orten berührt.

## Claims

1. A method for producing colored, three-dimensionally structured components with free-form areas, comprising the steps of:
- providing a structured surface (10, 140);
- applying three-dimensional color information to the structured surface (10, 140) by means of a non-contacting digital printing process as at least one inking layer (20);
- solidifying the at least one inking layer (20);
- pulling off the inking layer (20) from the structured surface (10, 140);
- thermoforming of the remaining at least one inking layer (20); and
- back injecting the thermoformed at least one inking layer with a shaping compound;
**characterized in that** ink is applied more strongly, corresponding to the inclination, to inclined surface elements of the three-dimensional structure on at least one of the inking layers than on planar surface elements.

2. The method of claim 1, wherein the structured surface is provided at a film (10), plate, roller (140) or the like.

3. A method for producing colored three-dimensionally structured components with free-form areas, comprising the steps of:
- providing a structured thermoformable film (10);
- applying the three-dimensional color information, divided into sub-areas, onto the films by means of the non-contacting digital printing process as at least one inking layer (20);
- solidifying the at least one inking layer (20) which is not necessarily continuous;
- thermoforming the film (10) having the at least one inking layer (20);
- back injecting the thermoformed film by a shaping compound, wherein the inking layer faces the compound; and
- pulling off the film (10), wherein the at least one inking layer (20) remains on the compound (22).

4. The method of claim 1 or 3, wherein thermoforming is effected by the back injection.

5. The method of claim 1 or 3, wherein the inking layer (20) is made of an elastically curing material or of a material which becomes elastic after curing, for example by heating.

6. The method of claim 3, wherein the inking layer (20) adheres less to the film (10) than to the shaping compound (22) and cohesion of the inking layer is greater than adhesion of the inking layer to the shaping compound.

7. The method of claim 1 or 3, wherein, before applying the inking layer, a further layer is applied to the structured surface (10, 140) or film, respectively, which is at least partially transparent, at least partially semi-transparent or at least partially opaque.

8. The method of claim 7, wherein the further layer is a surface protecting layer, an adhesion-promoting layer or a color priming layer.

9. The method of claim 3, wherein the structured film (10) is exclusively elastically deformed.

10. The method of claim 3, wherein the inking layer (20) is provided with a sealing layer.

11. The method of claim 10, **characterized in that** the sealing layer comprises a substantially smooth exposed surface.

12. The method of claim 10, **characterized in that** the sealing layer is dyed in a defined manner in view of color and/or gradation.

13. The method of claim 12, **characterized in that** color and/or gradation data are adjusted to the data of the three-dimensional structure.

14. The method of claim 10, **characterized in that** the sealing layer comprises a smaller reflectivity than the underlying inking layer.

15. The method of claim 3, **characterized in that** the structured film (10) is transparent.

16. The method of claim 3, **characterized in that** the structured film contacts a mould (52) used for back injection at one location (24) or at a plurality of locations.

## Revendications

1. Procédé de fabrication de pièces colorées à structure tridimensionnelle avec des surfaces à forme libre, comportant les étapes suivantes :
- la mise en place d'une superficie structurée (10, 140),
- l'application d'une information de couleur tridimensionnelle sur la superficie structurée (10, 140) au moyen d'un processus d'impression numérique sans contact en tant que couche minimale chromophore (20),
- la consolidation de la ou des couches chromophore(s) (20),
- le retrait de la couche chromophore (20) de la superficie structurée (10, 140),
- l'emboutissage de la ou des couches chromophore(s) restante(s) (20) et
- le moulage par injection de la couche ou des couches chromophore(s) emboutie(s) (20) à l'aide d'une masse de façonnage,
**caractérisé en ce que**, dans au moins l'une des couches chromophores (20), il se produit une application de couleur plus prononcée, conformément à l'inclinaison, sur les éléments de surface obliques de la structure tridimensionnelle que sur les éléments de surface plans.

2. Procédé selon la revendication 1, dans lequel on a prévu la superficie structurée sur un film (10), une plaque, un rouleau (140) ou des objets similaires.

3. Procédé de fabrication de pièces colorées à structure tridimensionnelle avec des surfaces à forme libre, comportant les étapes suivantes :
- la mise en place d'un film emboutissable structuré (10),
- l'application de l'information de couleur tridimensionnelle, répartie sur les éléments de surface, sur le film au moyen du processus d'impression numérique sans contact en tant que couche minimale chromophore (20),
- la consolidation de la ou des couche(s) chromophore(s) (20) pas forcément fermée(s),
- l'emboutissage du film (10) avec la ou les couche(s) chromophore(s) (20),
- le moulage par injection du film embouti avec une masse de façonnage, la couche chromophore étant tournée vers la masse et
- le retrait du film (10), la ou les couche(s) chromophore(s) (20) demeurant sur la masse (22).

4. Procédé selon la revendication 1 ou 3, dans lequel l'emboutissage est produit par le moulage par injection.

5. Procédé selon la revendication 1 ou 3, dans lequel la couche chromophore (20) est constituée d'un matériau à durcissement élastique ou d'un matériau qui devient élastique après durcissement, par exemple par réchauffement.

6. Procédé selon la revendication 3, dans lequel la couche chromophore (20) adhère moins fortement sur le film (10) que sur la masse de façonnage (22) et la cohésion de la couche chromophore est plus élevée que l'adhésion de la couche chromophore à la masse de façonnage.

7. Procédé selon la revendication 1 ou 3, dans lequel, sur la superficie structurée (10, 140) ou le film, avant l'application de la couche chromophore, on applique une couche supplémentaire qui est au moins partiellement transparente, au moins partiellement semi-transparente ou au moins partiellement opaque.

8. Procédé selon la revendication 7, dans lequel la couche supplémentaire est une couche de protection de la superficie, une couche d'accrochage ou une couche de fond.

9. Procédé selon la revendication 3, dans lequel le film structuré (10) est exclusivement élastiquement déformé.

10. Procédé selon la revendication 3, dans lequel la couleur chromophore (20) est pourvue d'une couche de vitrification.

11. Procédé selon la revendication 10, **caractérisé en ce que** la couche de vitrification présente une superficie découverte, sensiblement lisse.

12. Procédé selon la revendication 10, **caractérisé en ce que** la couche de vitrification est colorée de manière définie en ce qui concerne la couleur et/ou la gradation.

13. Procédé selon la revendication 12, **caractérisé en ce que** les données de couleur et/ou de gradation sont comparées aux données de la structure tridimensionnelle.

14. Procédé selon la revendication 10, **caractérisé en ce que** la couche de vitrification présente un pouvoir réflecteur plus faible que la couche chromophore sous-jacente.

15. Procédé selon la revendication 3, **caractérisé en ce que** le film structuré (10) est transparent.

16. Procédé selon la revendication 3, **caractérisé en ce que** le film structuré est en contact avec un moule (52), utilisé pour le moulage par injection, à un emplacement (24) ou à une pluralité d'emplacements.
